# EUROPEAN PATENT APPLICATION

(11) **EP 3 151 398 A1**
(43) Date of publication of application: **05.04.2017**
(21) Application number: 16190498.2
(22) Date of filing: 23.09.2016
(51) Int. Cl.: H02K 29/03, E05F 15/689

(54) **VEHICLE WINDOW LIFTING MECHANISM**

(30) Priority: 30.09.2015 CN 201510642609; 25.12.2015 CN 201510998632; 22.02.2016 CN 201610098848
(71) Applicant: Johnson Electric S.A., 3280 Murten (CH)
(72) Inventor: Li, Yue, Hong Kong (HK); Ta, Jing Ning, Hong Kong (HK); Zhou, Chui You, Hong Kong (HK); Wang, Yong, Hong Kong (HK); Li, Yong, Hong Kong (HK); Zhao, Yong Jun, Hong Kong (HK); Li, Qiu Mei, Hong Kong (HK)
(74) Representative: Hocking, Adrian Niall

(57) **Abstract**

A driving mechanism (100) drives a vehicle window to move up and down. The driving mechanism includes a housing (21), and a driving assembly (30) and a transmission assembly (50). The driving assembly (30) is engaged with the transmission assembly (50). The driving assembly (30) is partially received in the housing (21). The transmission assembly (50) includes a first transmission member (52) connected to the driving assembly (30), a second transmission member (53) engaging with the first transmission member (52), and a planetary gear set (55). The planetary gear set (55) connects to an external device. The driving assembly (30) drives the first transmission member (52) which in turn drives the second transmission member (53) to rotate. The second transmission member (53) drives the planetary gear set (55) which in turn drives the vehicle window to move.

## Description

### FIELD OF THE INVENTION

The present disclosure relates to a vehicle window lifting mechanism.

### BACKGROUND OF THE INVENTION

A vehicle window is usually driven by a driving mechanism to open and close. The driving mechanism generally includes a housing, a motor and a speed reduction transmission assembly disposed in the housing. The motor drives the vehicle window to open or close through the transmission assembly. The speed reduction transmission assembly is a worm and gear transmission assembly. However, the motor directly drives the worm and gear transmission assembly, which leads to unstable power output and low transmission efficiency.

### SUMMARY OF THE INVENTION

Accordingly, there is a desire for an improved vehicle window lifting mechanism.

The present disclosure provides a vehicle window lifting mechanism including a housing, and a driving assembly and a transmission assembly disposed in the housing. The driving assembly includes a single phase motor to drive a vehicle window to move up and down via the transmission assembly.

Preferably, the transmission assembly comprises at least two stages of speed reduction mechanism.

Preferably, a worm and gear transmission is a first stage of speed reduction mechanism and a planetary gear set is a second stage of reduction mechanism.

Preferably, the worm and gear transmission comprises a worm driven by the single phase motor, a worm gear engaging with the worm, and the planetary gear set is driven by the worm gear.

Preferably, the planetary gear set comprises a sun gear, a plurality of planetary gears, and an internal ring gear, and the sun gear and the worm gear at least partially overlap in an axial direction of the worm gear.

Preferably, the driving assembly is partially received in the housing, the housing comprises a first receiving portion, and a second receiving portion and a third receiving portion adjacent the first receiving portion, the first receiving portion defines a receiving chamber for receiving the driving assembly, the second receiving portion defines a accommodating chamber, the third receiving portion defines a receiving slot, the accommodating chamber is in communication with one end of the receiving chamber, the receiving slot is in communication with the accommodating chamber; the worm and gear transmission comprises a worm structure and a worm gear structure, and the worm structure is mounted in the accommodating chamber, and the worm gear structure is mounted in the receiving slot.

Preferably, the transmission assembly further comprises an axle and a connecting member, and one end of the axle is mounted to a bottom wall of the receiving slot and the other end sequentially passes through the worm gear, the planetary gear set and the connecting member.

Preferably, the sun gear is fixed to one side of the worm gear, the plurality of planetary gears surround a circumferential side of the sun gear, one end of the connecting member is connected to the plurality of planetary gears, the internal ring gear is attached around outer sides of the planetary gears and engaged with the planetary gears, an outer edge of a circumferential side of the connecting member is formed with resisting portion, the resisting portion resists against one side of the internal ring gear.

Preferably, a plurality of latching grooves is arranged along an inner circumferential wall of the receiving slot, the internal ring gear is an internal gear with latching blocks formed at an outer circumferential side thereof, and the latching blocks are engaged in the latching grooves.

Preferably, one side of the worm gear defines a groove, the internal ring gear is received in the groove, and the planetary gears are rotatably received in the groove.

Preferably, the vehicle window lifting mechanism further comprises a cover body, a cover plate and lugs, the cover body covers an open end of the receiving chamber, the cover plate covers an open end of the accommodating chamber, the lugs are disposed on the third receiving portion, the number of the lugs is three, and the three lugs are disposed at three vertexes of a triangle which has an incircle coinciding with an outer circumference of the receiving slot.

Preferably, a line connecting the two lugs adjacent the first receiving portion and an axis of the first receiving portion form an angle α therebetween, the angle α satisfies the following conditions: 60°≤α<90°.

Preferably, the single phase motor comprises an annular stator core, a rotor rotatably disposed within the stator core, and a winding wound around the stator core, the rotor comprises a plurality of permanent magnet members, and the rotor is capable of starting in either of two opposite directions relative to the stator.

Preferably, the stator core comprises a stator yoke, n stator teeth and n auxiliary teeth, the n stator teeth and the n auxiliary teeth are alternatively and spacedly arranged along a circumferential direction of the stator yoke, the winding comprises n coils each wound around one corresponding stator tooth; when the coils are energized, n main magnetic poles having the same polarity are produced respectively at the n stator teeth, and n auxiliary magnetic poles having a polarity opposite to the polarity of the main magnetic poles are produced respectively at the n auxiliary teeth, wherein n is a positive integer greater than 1.

A vehicle, includes a vehicle body, a door disposed on the vehicle body, a vehicle window disposed on the door; and the vehicle window lifting mechanism as described-above to drive the vehicle window to open an close.

### BRIEF DESCRIPTION OF THE DRAWINGS

Fig. 1 is a perspective view of a driving mechanism according to one embodiment of the present disclosure.
Fig. 2 is a perspective, exploded view of the driving mechanism of Fig. 1.
Fig. 3 is a perspective, exploded view of the driving mechanism of Fig. 2, viewed from another aspect.
Fig. 4 is a sectional view of the driving mechanism of Fig. 1, taken along line IV-IV thereof.
Fig. 5 is a sectional view of the driving mechanism of Fig. 1, taken along line V-V thereof.
Fig. 6 illustrates a single phase motor according to one embodiment of the present disclosure.
Fig. 7 is a cross-sectional view of the single phase motor of Fig. 6.

Below, embodiments of the present disclosure will be described in detail with reference to the accompanying drawings.

### DETAILED DESCRIPTION OF THE PREFERRED EMBODIMENTS

The technical solutions of the embodiments of the present disclosure will be clearly and completely described as follows with reference to the accompanying drawings. Apparently, the embodiments as described below are merely part of, rather than all, embodiments of the present disclosure. Based on the embodiments of the present disclosure, any other embodiment obtained by a person skilled in the art without paying any creative effort shall fall within the protection scope of the present disclosure.

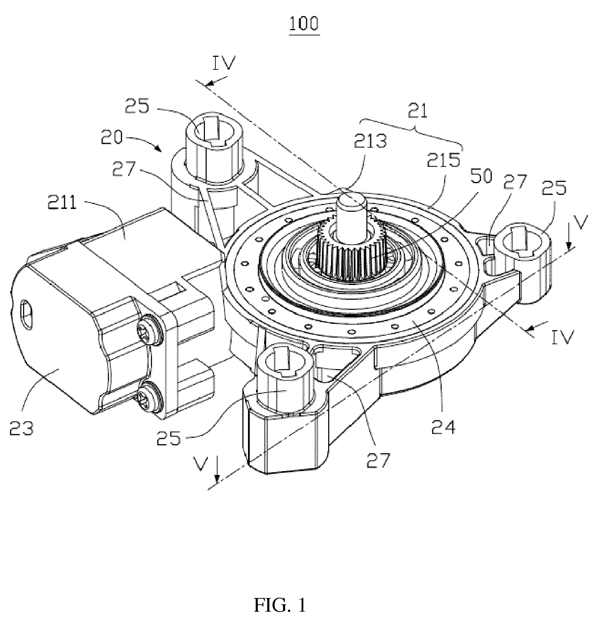

Referring to Fig. 1, a driving mechanism 100 in accordance with one embodiment of the present disclosure is used to drive an external device (not shown) to rotate or drive the external device to translate through a transmission mechanism (not shown). In the embodiment, the external device may be a vehicle window. By controlling the driving mechanism 100, the vehicle window can be driven to open or close. Alternatively, the external device may be another movable device such as a wheel of a toy, an impeller, which will be described in detail below.

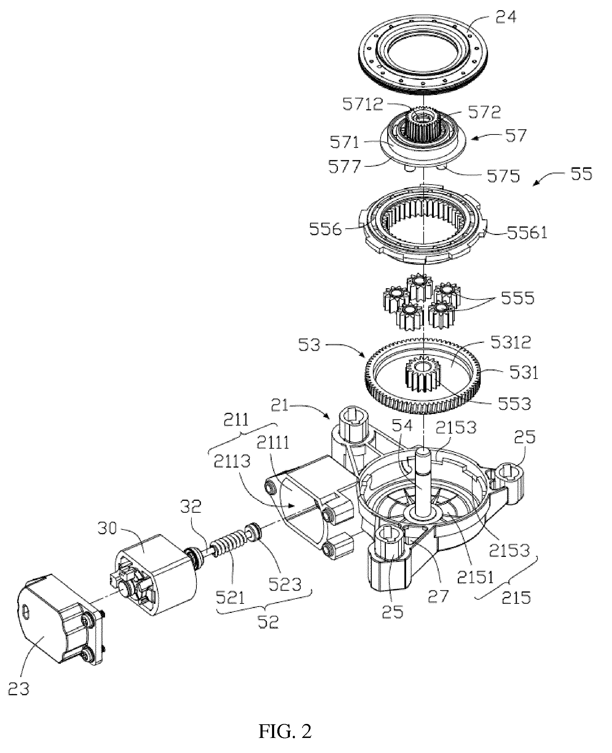

Referring to Fig. 1 and Fig. 2, the driving mechanism 100 includes a mounting assembly 20, a driving assembly 30, and a transmission assembly 50. In the embodiment, the driving assembly 30 and the transmission mechanism 50 are both disposed on the mounting assembly 20. The transmission assembly 50 is connected to the driving assembly 30. The mounting assembly 20 is configured to mount the driving mechanism 100 in the external device, for allowing the driving assembly 30 to drive the external device to move through the transmission assembly 50.

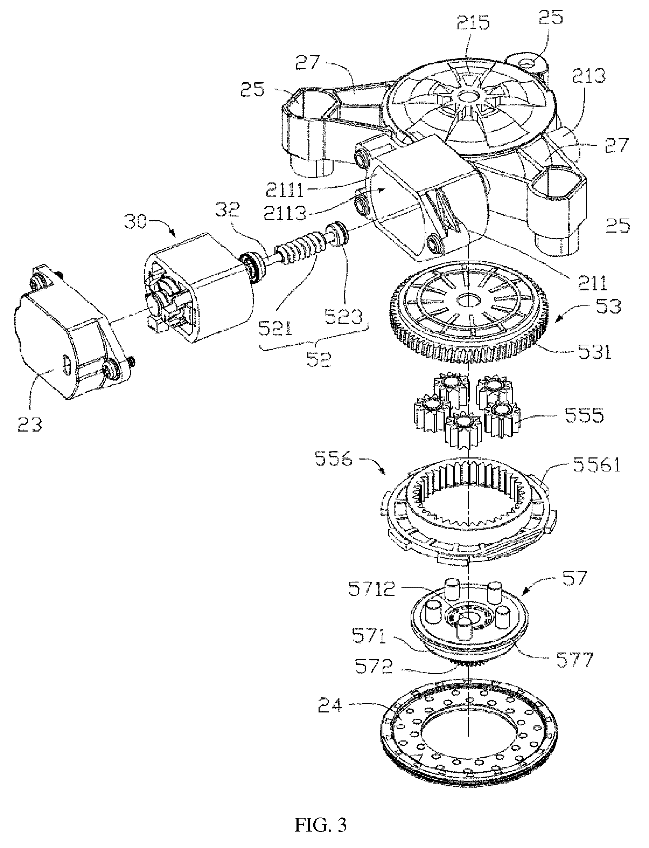

Referring also to Fig. 2 and Fig. 3, the mounting assembly 20 includes a housing 21, a cover body 23, a cover plate 24, and a plurality of lugs 25. In the embodiment, the cover body 23 and the cover plate 24 cover the housing 21. The lugs 25 are used to mount the mounting assembly 20 to a mounting portion (not shown) such as a vehicle body or the vehicle window.

In the embodiment, the housing 21 is a gearbox, which receives the driving assembly 30 and the transmission assembly 50. The housing 21 includes a first receiving portion 211, and a second receiving portion 213 and a third receiving portion 215 (Fig. 3) disposed adjacent the first receiving portion 211.

The first receiving portion 211 defines a receiving chamber 2111 for receiving the driving assembly 30. The receiving chamber 2111 has an opening 2113. The receiving chamber 2111 communicates with the outside environment via the opening 2113.

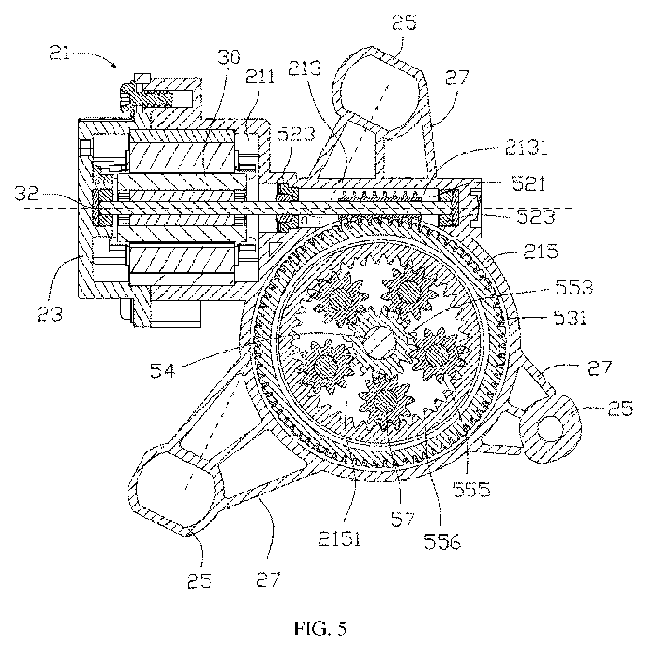

In the embodiment, the second receiving portion 213 is generally a hollow cylindrical structure with an open end. The second receiving portion 213 is disposed on a side of the first receiving portion 211 opposite from the opening 2113. The second receiving portion 213 defines an axial accommodating chamber 2131 (Fig. 5). The accommodating chamber 2131 is used to partially receive the driving assembly 50. The accommodating chamber 2131 communicates with one end of the receiving chamber 2111 opposite from the opening 2113.

The third receiving portion 215 defines a receiving slot 2151 that is generally circular disc-shaped, for receiving the transmission assembly 50. The receiving slot 2151 communicates with the receiving chamber 2111 at one side of the receiving slot 2151, for allowing the transmission assembly 50 to engage with the driving assembly 30. The third receiving portion 215 further includes a plurality of latching grooves 2153 defined along an inner circumferential wall of the receiving slot 2151, for latching parts of the transmission assembly 50.

The cover body 23 covers the opening 2113 and is detachably connected with the housing 21. The cover body 23 is used to close the receiving chamber 2111, such that the receiving chamber 2111 and the receiving slot 2151 are substantially isolated from outside environment to achieve a dustproof seal. The cover plate 24 covers on the third receiving portion 215 to assemble the transmission assembly 50 in the third receiving portion 215. In the embodiment, the cover plate 24 is a hollow annular structure, such that one end of the transmission assembly 50 passes through the cover plate 24 to connect to the external device.

The lugs 25 are spacedly disposed on the third receiving portion 215. The lugs 25 are used to connect with the external device to mount the driving mechanism 100 to the external device. In the embodiment, the number of the lugs 25 is three. The three lugs 25 are generally disposed at three vertexes of a triangle which has an incircle coinciding with the outer circumference of the receiving slot 2151. In order to accommodate irregular mounting space, the height, position and size of each lug 25 may be properly adjusted, e.g. the heights of at least two lugs 25 are different from each other, so that the mounting assembly 20 can stably mount the driving mechanism 100 to the external device. In the embodiment, a line connecting the two lugs 25 adjacent the first receiving portion 211 and an axis of the first receiving portion 211 form an angle α therebetween (as shown in Fig. 5). The angle α satisfies the following conditions: 60°≤α<90°, so that the first receiving portion 211 is inclined in a direction toward to the third receiving portion 215. When the angle α is equal to 90°, in order to avoid interference between the lugs 25 and the first receiving portion 211, a length of the second receiving portion 213 along a direction parallel to an axial direction of a motor usually needs to be increased.

Referring to Fig. 5, in general, a distance between the two lugs 25 adjacent the first receiving portion 211 is a maximum longitudinal size of the driving mechanism. Making the first receiving portion 211 incline in the direction toward to the third receiving portion 215 can reduce a lateral maximum size of the driving mechanism 100, i.e. a size in the axial direction of the motor, to reduce an overall size of the driving mechanism 100, thus the driving mechanism 100 is suitable to be used in applications subject to great constraints of mounting space, such as a vehicle door which provides a small space for mounting of the vehicle driving mechanism 100.

Further, in order to reasonably reduce an overall weight of the mounting assembly 20 and to ensure a certain rigidity of the mounting assembly, part of the housing 21 and/or the lugs 25 are removed to form a plurality of hollow sections 27 spacedly arranged on the housing 21 and/or the lugs 25. In the embodiment, the hollow sections 27 are through-hole structures passing through the housing 21 and/or the lugs 25. It should be understood that the hollow sections 27 may also be groove structures formed in the housing 21 and/or the lugs 25.

Referring again to Fig. 2, in the embodiment, the driving assembly 30 includes a motor. The driving assembly 30 may be a single phase brushless motor or a three phase brushless motor. Preferably, the driving assembly 30 is an inner rotor brushless motor. The driving assembly 30 is partially received in the first receiving portion 211, for driving the transmission assembly 50 to operate which in turn drives the external device to move.

A large part of the driving assembly 30 is received in the first receiving portion 211 of the housing 21, and the cover body 23 covers one end of the driving assembly 30 and is fixedly connected to the housing 21, such that the driving mechanism 100 overall has a smaller size, and the size of the external device with the driving mechanism 100 can therefore be reduced.

In the embodiment, the driving assembly 30 is a single phase motor. A stator core of the motor is directly mounted within the first receiving portion 211 of the housing 21. As a result, an outer housing assembly for mounting the stator core in a traditional motor is omitted, which further reduces the size and weight of the external device with the driving mechanism 100.

The transmission assembly 50 is disposed in the second receiving portion 213 and the third receiving portion 215. The transmission assembly 50 is connected to an output shaft 32 of the driving assembly 30. The transmission assembly 50 is used to connect to and drive the external device to move.

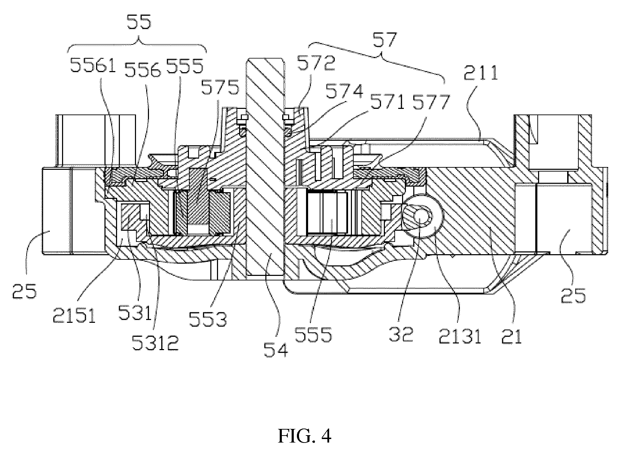

The transmission assembly 50 includes a first transmission member 52, a second transmission member 53, an axle 54, a planetary gear set 55, and a connecting member 57. In the embodiment, the first transmission member 52 is disposed on the output shaft 32 of the driving assembly 30, the second transmission member 53 is disposed in the receiving slot 2151 (as shown in Fig. 4 and Fig. 5) and is connected to the first transmission member 52. One end of the axle 54 is fixed to a bottom wall of the receiving slot 2151, and the other end of the axle 54 sequentially passes through the second transmission member 53, the planetary gear set 55 and the connecting member 57.

In the embodiment, the first transmission member 52 is a worm structure, and the second transmission member 53 is a worm gear structure. The first transmission member 52 is mounted in the second receiving portion 213, and the second transmission member 53 is mounted in the third receiving portion 215. Specifically, an output end of the output shaft 32 of the driving assembly 30 is supported in the second receiving portion 213 of the housing 21 through two bearings 523. The two bearings 523 are mounted at two ends of the accommodating chamber 2131, respectively. In the embodiment, the first transmission member 52 includes a worm 521. The worm 521 is a hollow tubular structure with threads formed on an outer circumferential surface thereof. The worm 521 is attached over the output shaft 32 and located between the two bearings 523 for operatively engaging with the second transmission member 53. The worm 521 rotates relative to the mounting assembly 20 along with the output shaft 32. The second transmission member 53 is rotatably attached around the axle 54. The second transmission member 53 is disposed in the third receiving portion 215 and engaged with the worm 521 of the first transmission member 52.

Referring to Fig. 2 to Fig. 4, in the embodiment, the second transmission member 53 includes a worm gear 531 engaging with the worm 521. A groove 5312 is formed at one side of the worm gear 531, and the planetary gear set 55 is received in the groove 5312.

The planetary gear set 55 includes a sun gear 553, a plurality of planetary gears 555, and an internal ring gear 556. The sun gear 553 is fixed to one side of the worm 531 that defines the groove 5312 and rotates along with the worm gear 531. It should be understood that the worm gear 531 and the sun gear 553 may be integrally formed; alternatively, the sun gear 553 may be fixed to the worm 531 by injection molding, welding or adhesive.

The planetary gears 555 engage with the sun gear 553. The planetary gears 555 are rotatably received in the groove 5312 and surround the sun gear 553. In the embodiment, in order to achieve smoother transmission and higher load carrying capability of the transmission assembly 50, the number of the planetary gears 555 is five. In other embodiments, the number of the planetary gears 555 may be another value greater than or equal to two.

In the embodiment, the internal ring gear 556 is a generally annular internal gear structure. One end of the internal ring gear 556 is received in the groove 5312, and the second transmission member 53 is rotatably attached around an outer side of the internal ring gear 556. The internal ring gear 556 is attached around outer sides of the planetary gears 555. Each planetary gear 555 engaged with the sun gear 553 and the internal ring gear 556. A plurality of latching blocks 5561 is spacedly arranged along an outer circumferential side of the internal ring gear 556. Each of the latching blocks 5561 is engaged with a corresponding one of the latching slots 2153 (as shown in Fig. 2), such that the internal ring gear 556 is fixed relative to the receiving slot 2151.

One end of the connecting member 57 is connected to the planetary gears 555 and rotates under the driving of the planetary gears 555. The other end of the connecting member 57 connects to the external device to drive the external device to rotate or translate. In the embodiment, the connecting member 57 includes a main body 571, an output member 572, a sealing ring 574, and a plurality of connecting pins 575. The main body 571 defines a through axle hole 5712 (as shown in Fig. 2 and Fig. 3) in an axial direction, for allowing the axle 54 to pass therethrough to thereby rotatably attach the main body 571 around the axle 54. The output member 572 is disposed at one side of the main body 571 to connect to the external device. In the embodiment, a circumferential side of the output member 572 is provided with gear teeth (not labeled) for enabling the connecting member 57 to better drive the external device. The sealing ring 574 is received in the output member 572 and is coaxial with the axle hole 5712. The sealing ring 574 is rotatably attached around the axle 54 for resisting against between the axle 54 and an inner wall surface of the output member 572. It should be understood that the output member 572 may connect to the external device for transmission of the movement through a gear rack, a belt, a chain or a rope and, therefore, the circumferential side of the output member 572 may also be smooth or provided with grooves for engaging with the corresponding gear rack or belt for the transmission.

The number of the connecting pins 575 is the equal to the number of the planetary gears 555. The connecting pins 575 are arranged into a ring on a side of the main body 571 opposite from the output member 572. One end of each connecting pin 575 away from the main body 571 is received in a central hole (not labeled) of a corresponding one of the planetary gears 555, such that the planetary gear 555 can spin about the corresponding connecting pin 575. In the embodiment, the connecting member 57 further includes an abutting portion 577 formed along an outer edge of the circumferential side of the main body 571. One side of the abutting portion 577 abuts against one side of the internal ring gear 556, such that an axial clearance is formed between the main body 571 and the planetary gears 555 to prevent a direct friction between one side of the main body 571 and the planetary gears 555.

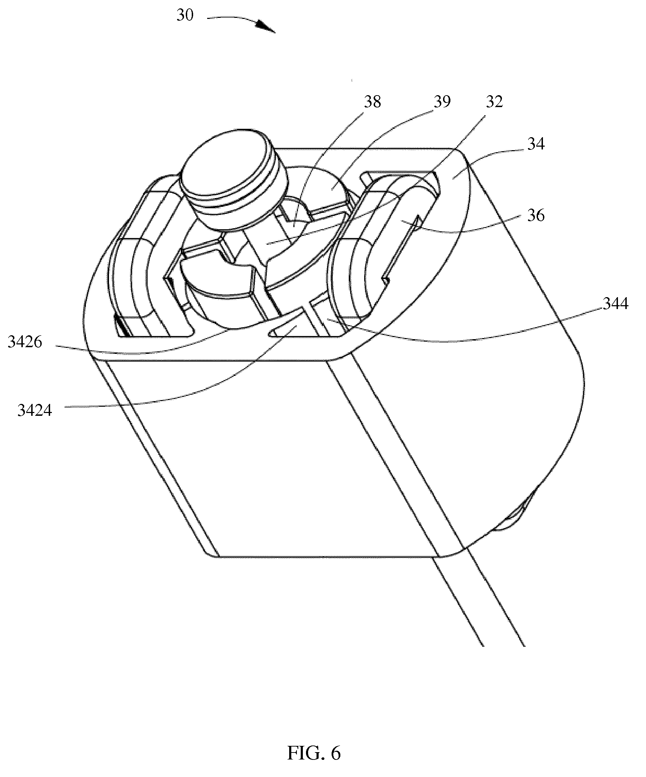

Fig. 6 illustrates a single phase motor according to one embodiment of the present disclosure.

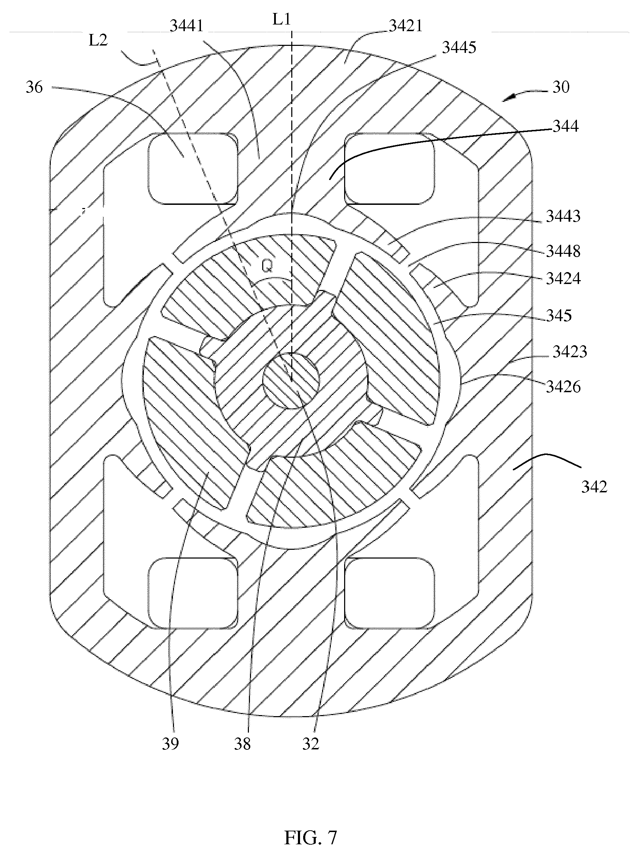

Fig. 7 is a cross-sectional view of the driving assembly according to the embodiment of the present disclosure. The cross-section used herein refers to a section formed by a plane cutting through the driving assembly, wherein the plane is perpendicular to the output shaft of the driving assembly.

Referring to Fig. 6 and Fig. 7, the driving assembly 30 can be an inner rotor motor including a stator and a rotor. The rotor is rotatably received in the stator. The output shaft 32 of the rotor is connected to the transmission assembly 50. The stator includes a stator core 34 and a stator winding 36. The stator core 34 may be fixedly disposed in the receiving chamber 2111 of the first receiving portion 211, and the stator winding 36 is wound around the stator core 34.

The stator core 34 includes a stator yoke 342 and stator teeth 344 extending inwardly from the stator yoke 342. The stator yoke 342 is fixedly connected in the receiving chamber 2111, such that the housing assembly as in the traditional motor can be omitted.

A cross-section of the stator yoke 342 is generally in the shape of a closed square, and an outer profile of the cross-section of the stator yoke 342 is generally in the shape of a rounded square/obround. The stator yoke 342 includes two arcuate first sidewalls 3421 and two flat second sidewalls 3423. The two first sidewalls 3421 are disposed opposing to each other, the two second sidewalls 3423 are disposed opposing to each other, and two sides of each second sidewall 3423 are connected to the two first sidewalls 3421, respectively, such that the cross-section of the stator yoke 342 is in the shape of a continuously closed square.

In the embodiment, specifically, an outer circumferential surface of the first sidewall 3421 is generally a part of a cylindrical surface, such that the outer profile of the cross-section of the first sidewall 3421 is in the shape of a circular arc. An inner surface of the first sidewall 3421 is generally a flat surface and, therefore, the first sidewall 3421 has a thickness that is smaller at two sides than at a middle thereof. An outer circumferential surface of the second sidewall 3423 is generally a flat surface, such that the outer profile of the cross-section of the second sidewall 2423 is generally a straight line segment. Preferably, a maximal distance between the outer surfaces of the two first sidewalls 3421 is greater than a maximal distance between the outer surfaces of the two second sidewalls 3423. As such, the cross-section of the motor is in the rectangular shape (or referred to as an obround shape).

An inner surface of each second sidewall 3423 forms two extensions 3424. The extensions 3424 are used to conduct magnetic flux and assist the stator teeth 344 to form a magnetic flux loop. One end of each extension 3424 is a connecting end (not labeled), and the other end is an extension end (not labeled). The connecting ends of the two extensions 3424 are connected with each other and connected to a generally middle position of the second sidewall 3423. The extension ends of the two extensions 3424 both extend in a direction away from the second sidewall 3423, and the extension ends of the two extensions 3424 are spaced away from each other, such that an outer profile of cross-sections of the two extensions 3424 is generally V-shaped.

In the embodiment, the number of the stator teeth 344 is two. The stator teeth 344 are connected to the inner surfaces of the first sidewalls 3421, for allowing the stator winding 36 to be wound thereon.

In the illustrated embodiment, specifically, the stator tooth 344 is generally Y-shaped, including a winding portion 3441 and pole shoes 3443. The winding portion 3441 extends radially inwardly from the inner surface of the first sidewall 3421. The pole shoe 3443 is disposed at one end of the winding portion 3441 away from the first sidewall 3421.

In the embodiment, the number of the pole shoes 3443 for each stator tooth 344 is two. The two pole shoes 3443 are disposed at one end of the winding portion 3441 away from the inner surface of the first sidewall 3421. The two pole shoes 3443 extend from a distal end of the winding portion 3441 along a circumferential direction of the rotor, respectively, and the extending directions are opposite to each other, such that the two pole shoes 3443 and the winding portion 3441 cooperatively form the Y-shaped profile of the stator tooth 344. The pole shoes 3443 can prevent the stator winding from falling off the winding portion 3441 and, at the same time, can be used to conduct magnetic flux.

Similar to the construction of the extension 3424, each pole shoe 3443 has one end as a connecting end (not labeled) and the other end as an extension end (not shown). The connecting ends of the two pole shoes 3443 are connected with each other and connected to one side of the winding portion 3441 away from the first sidewall 3421. The extension ends of the two pole shoes 3443 both extend in the circumferential direction of the rotor and away from the first sidewall 3441, and the extension ends of the two pole shoes 3443 are spaced away from each other, such that an outer profile of cross-sections of the two pole shoes 3443 is generally V-shaped and hence an outer profile of the cross-section of the stator tooth 344 is generally Y-shaped.

Further, after the extension end of each pole shoe 3443 extends away from the winding portion 3441, the extension end of the pole shoe 3443 is close to a distal end of the extension 3424 of the auxiliary tooth 3423 adjacent the pole shoe 3443. As a result, the pole shoes 3443 of the stator teeth and the extensions 3424 of the auxiliary teeth cooperatively form a receiving space 345 for receiving the rotor 50 therein. At the same time, each pole shoe 3443, the extension 3424 adjacent the pole shoe 3443 and the stator yoke 342 cooperatively form a receiving slot 15 for receiving the stator winding 36 therein.

Further, the distal end of the pole shoe 3443 and the distal end of the extension 3424 adjacent the pole shoe 3443 are spaced by a preset distance to form an opening 3448, thereby reducing magnetic leakage. It should be understood that the distal end of the extension 3424 adjacent the pole shoe 3443 can also be connected by a magnetic bridge with a large magnetic reluctance.

The rotor is rotatably received in the stator core. In the illustrated embodiment, specifically, the rotor includes the output shaft 32, a rotor core 38, and permanent magnet members 39. The rotor core 38 is disposed on the output shaft 32, and the permanent magnet members 39 are disposed on the rotor core 38. It should be understood that the permanent magnet members 39 can also be directly fixed to the output shaft 32.

Referring again to Fig. 5, in the embodiment, the output shaft 32 is generally a cylindrical shaft which is rotatably disposed in the housing 21. The output shaft 32 defines an axis coaxial with an axis of the stator core and extending toward the receiving slot 3131 (Fig. 5). The output shaft 32 is used to connect to the transmission assembly 50 and drive the transmission assembly 50 to move.

The rotor core 38 is fixedly attached around the output shaft 32 and is received in the receiving space 345 of the stator.

Preferably, an outer circumferential surface of each permanent magnetic pole 39 away from the rotor core 38 is located on a same cylindrical surface centered at the center of the rotor, such that an outer profile of cross sections of the permanent magnet members 39 is generally circular-shaped.

Further, an inner surface of a connection area of the two pole shoes 3443 of each stator tooth, i.e. a pole face opposing to the rotor, is formed with a recess 3445, and a connection area of the two extensions 3424 of each auxiliary tooth is formed with a recess 3426. The pole faces of the pole shoes 3443 of the stator teeth 344 and the extensions 3424 of the auxiliary teeth of the stator core 34 are located on a same cylindrical surface centered at the center of the rotor, except for the parts of the recesses 3445, 3426. As such, the stator and the rotor form therebetween a substantially even air gap. That is, the air gap is even, except for the portions corresponding to the recesses 3445, 3426 and the openings between the adjacent magnetic poles.

In the embodiment, the provision of the recesses 3445, 3426 makes a pole axis L2 of the rotor (a center line of the permanent magnetic pole) able to be offset from a pole axis L1 of the stator (a center line of the stator tooth) by a certain angle. An included angle Q between the rotor pole axis and the stator pole axis is referred as a startup angle. Preferably, the recesses 3445, 3426 are aligned with centers of the stator tooth and the auxiliary tooth, respectively, such that the startup angle is equal to or close to a 90-degree electric angle, which makes the rotor easily achieve bidirectional startup. By altering the direction of the electric current in the stator winding 36, the startup direction of the rotor can be changed.

It should be understood that the positions of the recesses 3445, 3426 can be changed depending upon design requirements. For example, the recesses 3445, 3426 are all offset from the centers of the stator teeth and auxiliary teeth along a clockwise direction or a counter-clockwise direction, such that the rotor starts easier in one direction than in the other.

In the embodiment, there are four permanent magnet members 39. The four permanent magnet members 39 are fixedly disposed on an outer circumferential surface of the rotor core 38 and are spacedly arranged along the circumferential direction of the rotor core 38. Each permanent magnet member 39 forms one permanent magnetic pole, and two adjacent permanent magnet members 39 have opposite polarities. The stator winding 36 includes two coils respectively wound around the two stator teeth 344. When an electric current flows through the stator winding 36, the energized winding produces an induction magnetic field. Magnetic fluxes produced by each energized coil enter the rotor through the pole shoes, and go back to the stator tooth through the extensions of the two auxiliary teeth adjacent the pole shoes and the stator yoke to thereby form magnetic flux loops. That is, the magnetic fluxes produced by each energized coil go sequentially through the winding portion 3441, the two respective pole shoes 3443, the air gap between the pole shoes and the rotor, the rotor, the two respective extensions 3424 adjacent the two pole shoes, and the stator yoke to form two closed magnetic flux loops. Therefore, in the embodiment, upon being energized, the two coils can form four magnetic flux loops, i.e. forming a four-pole motor. In comparison with the traditional two-pole motor (no auxiliary poles are formed on the stator), the present disclosure reduces the magnetic path and magnetic reluctance, thereby increasing the output power of the motor.

It should be understood that the outer surfaces of the four permanent magnet members 39 may not be limited to the concentric circular arc surfaces as described above. For example, the outer surfaces of the four permanent magnet members 39 may be eccentric circular arc surfaces. For example, the outer surface of each permanent magnetic pole 39 is spaced from the center of the rotor by a distance that progressively decreases in a circumferential direction of the rotor from a middle to two ends of the outer surface and is symmetrical with respect to a center line of the outer surface, such that the outer surface of each permanent magnetic pole and the stator form therebetween an uneven air gap that is substantially symmetrical with respect to the center line of the outer surface.

Preferably, the driving assembly 30 utilizes the single phase permanent magnet brushless motor. In the above embodiment, the driving assembly 30 utilizes the single phase four-pole permanent magnet brushless motor. Because the single phase permanent magnet brushless motor includes only two opposingly disposed stator teeth, and the two coils are respectively disposed on the two stator teeth, when a distance between the two first sidewalls 3421 of the stator yoke is fixed, a distance between the two second sidewalls 3423 may be set to be relatively smaller. Therefore, with the overall size of the single phase brushless motor being reduced, the overall weight of the driving mechanism is also reduced, and the output power of the single phase brushless motor is relatively greater. In addition, the single phase brushless motor is disposed in the housing 21, the outer iron housing of the traditional motor is omitted, which further reduces the space occupied by the motor, such that the overall size of the driving mechanism is relatively smaller. Furthermore, the outer shape of the motor of the embodiment of the present disclosure is generally rectangular/obround, with its width (i.e. the size of one pair of opposite sides) being less than its length (i.e. the size of the other pair of opposite sides). The outer shape of the motor matches with the shape of the receiving chamber 2111 of the housing 21. In the driving mechanism as configured above, the housing 21 has a low profile structure (a size in a direction perpendicular to the second sidewall 3423 of the motor is obviously less than a size in a direction parallel to the second sidewall 3423), which is particularly suitable for use in applications with low profile space such as the vehicle window lifting mechanism. In the motor of the embodiment of the present disclosure, a ratio of a maximal outer diameter of the rotor (i.e. a maximal outer diameter of the rotor corresponding to the permanent magnet members) to a width of the stator core (the distance between the outer surfaces of the two second sidewalls 3423) can be greater than 0.6. That is, the rotor can be made as large as possible, thus increasing the output power of the motor.

It should be understood that the number of the permanent magnet members 39 may not be limited to four, which can be six, eight, ten, or even more. Likewise, the number of the stator teeth 344 may not be limited to two, which can be four, six, eight, ten, or even more, as long as the number of the permanent magnet members 39 is two times of the number of the stator teeth 344. Correspondingly, the number of the auxiliary teeth may not be limited to two as described above, which can be four, six, eight, ten, or even more, as long as the number of the auxiliary teeth is equal to the number of the stator teeth 344, and the number of the coils is equal to the number of the stator teeth 344.

In short, the number relationship between the stator teeth, auxiliary teeth, coils and permanent magnet members should satisfy the following conditions: the number of the stator teeth, the auxiliary teeth and the coils is n, the n stator teeth and the n auxiliary teeth are alternatively and spacedly arranged along the circumferential direction of the stator yoke, and each coil is wound around one corresponding stator tooth; the number of the permanent magnet members is 2n. When the n coils are energized, n main magnetic poles having the same polarity can be produced respectively at the n stator teeth, and n auxiliary magnetic poles having a polarity opposite to the polarity of the main magnetic poles can be produced respectively at the n auxiliary teeth. Wherein, n is a positive integer greater than 1. In the above single phase motor, upon the winding being energized, the main magnetic pole and the auxiliary magnetic pole adjacent the main magnetic pole can form the magnetic flux loop therebetween. In comparison with the traditional two-pole motor, the magnetic path is improved. To obtain the same output power, material consumption of the winding and the stator core of the motor can be reduced, which can therefore reduce cost. On the other hand, when the outer diameter of the rotor is fixed, the size of the stator core may be set to be relatively smaller, which reduces the overall size of the motor and hence the overall size of the driving mechanism.

It should be understood that the present disclosure may also utilize another type of single phase motor, especially another type of single phase inner rotor motor. The single phase inner rotor motor includes an annular stator core, a rotor rotatably disposed in the stator core, and a winding wound around the stator core. The rotor includes a plurality of permanent magnet members. The rotor can start in either one of opposite directions relative to the stator. The stator core includes an annular yoke and a plurality of teeth extending inwardly from the yoke. A distal end of each tooth is formed with a pole face opposing to the rotor, and each pole face is formed with a positioning recess, such that the rotor can stop at a position offset from a dead point.

The driving mechanism provided by the embodiment of the present disclosure can be utilized in a vehicle for driving parts of the vehicle to move. In particular, the driving mechanism can be used as a vehicle window driving mechanism. The vehicle may include a vehicle body, a door disposed on the vehicle body, and a vehicle window disposed on the door. The driving mechanism is disposed within the vehicle door and connected with the vehicle window through the transmission assembly 50. Preferably, the connecting member 57 of the transmission assembly 50 is connected to the vehicle window through another transmission part (such as a gear rack), so as to convert the rotation of the driving assembly 30 into translation of the vehicle window. Controlling the rotation of the driving assembly 30 can control the translation of the vehicle window relative to the vehicle door, thus opening or closing the vehicle window. Because the driving mechanism of the present disclosure has the advantages of small size and lightweight, it occupies a smaller mounting space within the vehicle door and can be firmly mounted. In the embodiment, other structures of the vehicle are known structures, which are not described herein in detail.

The driving mechanism of the present disclosure utilizes multiple stages of speed reduction transmission. For example, in the above embodiment, a stage of planetary gear transmission is added in addition to the worm and gear transmission. That is, the worm and gear performs a first stage of speed reduction, and the planetary gear set performs a second stage of speed reduction, thereby increasing the transmission ratio of the whole transmission assembly 50 and achieves good speed reduction result, which makes the power output more stable and smoother, such that a final large torque output can be achieved with a small driving force outputted by the driving assembly 30. Therefore, the single phase motor is particularly suitable for the driving mechanism, thereby reducing the cost of the motor.

Although the invention is described with reference to one or more embodiments, the above description of the embodiments is used only to enable people skilled in the art to practice or use the invention. It should be appreciated by those skilled in the art that various modifications are possible without departing from the spirit or scope of the present disclosure. The embodiments illustrated herein should not be interpreted as limits to the present disclosure, and the scope of the invention is to be determined by reference to the claims that follow.

## Claims

1. A vehicle window lifting mechanism (100), comprising:
a housing (21);
a driving assembly (30) disposed in the housing (21),
a transmission assembly (50) disposed in the housing (21); and
the driving assembly (30) comprising a single phase motor to drive a vehicle window to move up or move down via the transmission assembly (50).

2. The vehicle window lifting mechanism of claim 1, wherein the transmission assembly (50) comprises at least two stages of speed reduction mechanism.

3. The vehicle window lifting mechanism of claim 2, wherein a worm and gear transmission is a first stage of speed reduction mechanism and a planetary gear set (55) is a second stage of reduction mechanism, and the first stage of speed reduction mechanism engages with the second stage of speed reduction mechanism.

4. The vehicle window lifting mechanism of claim 3, wherein the first stage of speed reduction mechanism comprises a worm (521) driven by the single phase motor, a worm gear (531) engaging with the worm (521), and the planetary gear set (55) is driven by the worm gear (531).

5. The vehicle window lifting mechanism of claim 4, wherein the planetary gear set (55) comprises a sun gear (553), a plurality of planetary gears (555), and an internal ring gear (556), and the sun gear (553) and the worm gear (531) at least partially overlap in an axial direction of the worm gear (531).

6. The vehicle window lifting mechanism of claim 3, wherein the driving assembly (30) is partially received in the housing (21), the housing (21) comprises a first receiving portion (211), and a second receiving portion (213) and a third receiving portion (215) adjacent the first receiving portion (211), the first receiving portion (211) defines a receiving chamber (2111) for receiving the driving assembly (30), the second receiving portion (213) defines a accommodating chamber (2131), the third receiving portion (215) defines a receiving slot (2151), the accommodating chamber (2131) is in communication with one end of the receiving chamber, the receiving slot is in communication with the accommodating chamber (2131); the worm (521) is mounted in the accommodating chamber (2111), and the worm gear (531) is mounted in the receiving slot (2151).

7. The vehicle window lifting mechanism of claim 6, wherein the transmission assembly (50) further comprises an axle (54) and a connecting member (57), and one end of the axle (54) is mounted to a bottom wall of the receiving slot (2151) and the other end sequentially passes through the worm gear (531), the planetary gear set (55) and the connecting member (57).

8. The vehicle window lifting mechanism of claim 7, wherein the sun gear (553) is fixed to one side of the worm gear (531), the plurality of planetary gears (555) surround a circumferential side of the sun gear (553), one end of the connecting member (57) is connected to the plurality of planetary gears (555), the internal ring gear (556) is attached around outer sides of the planetary gears and engaged with the planetary gears, an outer edge of a circumferential side of the connecting member (57) is formed with a resisting portion (577), the resisting portion (577) resists against one side of the internal ring gear (556).

9. The vehicle window lifting mechanism of claim 8, wherein a plurality of latching grooves (2153) is arranged along an inner circumferential wall of the receiving slot (2151), the internal ring gear (556) comprises a plurality latching blocks (5561) formed at an outer circumferential side thereof, and the latching blocks (5561) are engaged in the latching grooves (2153).

10. The vehicle window lifting mechanism of claim 8, wherein one side of the worm gear (531) defines a groove (5312), the internal ring gear (556) is received in the groove (5312), and the planetary gears (555) are rotatably received in the groove (5312).

11. The vehicle window lifting mechanism of claim 6, wherein the vehicle window lifting mechanism (100) further comprises a cover body (23), a cover plate (24) and lugs (25), the cover body (23) covers an open end of the receiving chamber (2111), the cover plate (24) covers an open end of the accommodating chamber (2131), the lugs (25) are disposed on the third receiving portion (215), the number of the lugs (25) is three, and the three lugs (25) are disposed at three vertexes of a triangle which has an incircle coinciding with an outer circumference of the receiving slot (2151).

12. The vehicle window lifting mechanism of claim 9, wherein a line connecting the two lugs (25) adjacent the first receiving portion (211) and an axis of the first receiving portion (211) form an angle α therebetween, the angle α satisfies the following conditions: 60°≤α<90°.

13. The vehicle window lifting mechanism of claim 1, wherein the single phase motor comprises an annular stator core (34), a rotor rotatably disposed within the stator core (34), and a winding (36) wound around the stator core (34), the rotor comprises a plurality of permanent magnet members (39), and the rotor is capable of starting in either of two opposite directions relative to the stator.

14. The vehicle window lifting mechanism of claim 13, wherein the stator core comprises a stator yoke (342), n stator teeth (344) and n auxiliary teeth, the n stator teeth (344) and the n auxiliary teeth are alternatively and spacedly arranged along a circumferential direction of the stator yoke (342), the winding (36) comprises n coils each wound around one corresponding stator tooth (344); when the coils are energized, n main magnetic poles having the same polarity are produced respectively at the n stator teeth, and n auxiliary magnetic poles having a polarity opposite to the polarity of the main magnetic poles are produced respectively at the n auxiliary teeth, wherein n is a positive integer greater than 1.

15. A vehicle, comprising:
a vehicle body;
a door disposed on the vehicle body;
a vehicle window disposed on the door; and
a vehicle window lifting mechanism (100) of one of claims 1-14 to drive the vehicle window to open and close.
